# EUROPEAN PATENT SPECIFICATION

(11) **EP 4 760 637 B1**
(45) Date of publication and mention of the grant of the patent: **07.10.2026**
(21) Application number: 24863824.9
(22) Date of filing: 30.09.2024
(51) Int. Cl.: G06T 7/73, G06T 5/80, G06T 7/00, G06T 17/20, G06T 19/20, G06V 10/70, G06V 20/64, H04N 23/60, G06T 7/55, G06T 7/70

(54) **IMAGE ANALYSIS APPARATUS, IMAGE ANALYSIS METHOD, AND COMPUTER PROGRAM**
BILDANALYSEVORRICHTUNG, BILDANALYSEVERFAHREN UND COMPUTERPROGRAMM
DISPOSITIF ET PROCÉDÉ D'ANALYSE D'IMAGE, ET PROGRAMME INFORMATIQUE

(43) Date of publication of application: 17.06.2026
(73) Proprietor: CalTa Inc., Minato-ku Tokyo 108-0074 (JP)
(72) Inventor: TAKAMIZAWA, Takuya, Tokyo 108-0074 (JP); IGUCHI, Shigenobu, Tokyo 108-0074 (JP)
(74) Representative: Hasegawa, Kan
(86) International application number: PCT/JP2024/034909
(87) International publication number: WO 2026/069645

(56) References cited:
- JP-A- 2020 021 466
- JP-A- 2020 021 466
- US-A1- 2021 358 102

## Description

### [TECHNICAL FIELD]

The present disclosure relates to an image analysis apparatus, an image analysis method, and a computer program.

### [BACKGROUND ART]

The diagnostic system described in JP 2019 - 070 631 A has a function to automatically determine and detect deteriorated areas by performing diagnostic processing by a computer based on continuous aerial images taken by a flying body of past and present subjects. The subjects are buildings or infrastructure facilities, etc. A predetermined area on the surface of the subject is a diagnostic target area. Based on the user's input operation, the diagnostic target area of the subject is set as a basic setting.

The diagnostic system described in JP 2019 - 070 631 A has an SFM processing unit. The SFM processing unit applies SFM processing to a plurality of input images to restore the 3D structure and output a three-dimensional model.

US 2021/358102 A1 describes an aircraft-utilizing deterioration diagnostic system. The diagnostic system includes: a drone configured to be navigated along a route around a target and having a camera configured to photograph the target; and a computer configured to control navigation of the aircraft and photographing by the camera. The computer is configured to: acquire data from the aircraft including an image group obtained by consecutively photographing the target for each predetermined date and time; based on diagnostic data including a diagnostic image group photographed at a current date and time, reference data including a reference image group of a previous date and time, associate, for the same target, images including the same portion as comparison target images; compare the previous image and the current image among the comparison target images to detect a deteriorate portion; and provide a screen converted and visualized for the user such that the deteriorated portion in the image is plotted on the three-dimensional model of the target.

JP 2020 021466 A describes an inspection system, which includes: a first acquisition unit that acquires a captured two-dimensional image, first coordinates indicating a photographing position, and a photographing angle indicating a photographing direction regarding photographing of a facility to be inspected by a mobile body; a second acquisition unit into which an inspection position of the facility is input on the two-dimensional image; a position-inside-virtual space acquisition unit that acquires the position corresponding to the inspection position and inside the virtual space on the basis of a conversion rule that converts from coordinates of the two-dimensional image to coordinates in the virtual space and corresponds to the first coordinates and the photographing angle; and an output unit that outputs information indicating the position inside the virtual space acquired by the position-inside-virtual space acquisition unit.

### [SUMMARY OF INVENTION]

### [Technical Problem]

Generally, there may be cases where a diagnostic target area is searched from a three-dimensional model of a subject, and the diagnostic target area is diagnosed.

However, it is often difficult to search for a target region such as a diagnostic target region from a three-dimensional model and to identify the position of the target region on the three-dimensional model.

Therefore, the present disclosure has been made in view of the foregoing and has its object of providing an image analysis apparatus, an image analysis method, and a computer program that make it possible to identify a position of a target region on a three-dimensional model by a simple process.

### [Solution to Problem]

The present invention relates to an image analysis apparatus according to claim 1, an image analysis method according to claim 6, and a computer program according to claim 7. Claims 2 to 5 refer to specifically advantageous realizations of the image analysis apparatus according to claim 1.

According to an aspect of the present disclosure, there is provided an image analysis apparatus comprising: a model generation unit that generates a three-dimensional model of a subject based on a plurality of two-dimensional images generated by imaging the subject from a plurality of different imaging positions; an image placement unit that places, among the plurality of two-dimensional images, a target two-dimensional image in a virtual space based on imaging three-dimensional coordinates and imaging posture information, the imaging three-dimensional coordinates being three-dimensional coordinates in the virtual space where the three-dimensional model is placed and indicating an imaging position when the target two-dimensional image is generated, and the imaging posture information indicating a posture of a camera that performs imaging; and a target coordinate calculation unit that calculates second target three-dimensional coordinates indicating a position where a straight line passing through the imaging three-dimensional coordinates and first target three-dimensional coordinates contacts the three-dimensional model, wherein the first target three-dimensional coordinates indicate a position in the virtual space of a target image included in the target two-dimensional image.

Also, according to an aspect of the present disclosure, there is provided an image analysis method comprising: generating a three-dimensional model of a subject based on a plurality of two-dimensional images generated by imaging the subject from a plurality of different imaging positions; acquiring imaging three-dimensional coordinates and imaging posture information, the imaging three-dimensional coordinates being three-dimensional coordinates in a virtual space where the three-dimensional model is placed and indicating an imaging position when a target two-dimensional image among the plurality of two-dimensional images is generated, and the imaging posture information indicating a posture of a camera that performs imaging; placing the target two-dimensional image in the virtual space based on the imaging three-dimensional coordinates and the imaging posture information; calculating first target three-dimensional coordinates, which are three-dimensional coordinates in the virtual space of a target image included in the target two-dimensional image; and calculating second target three-dimensional coordinates, which are three-dimensional coordinates of a position where a straight line passing through the imaging three-dimensional coordinates and the first target three-dimensional coordinates contacts the three-dimensional model.

Furthermore, according to an aspect of the present disclosure, there is provided a computer program causing a computer to perform: generating a three-dimensional model of a subject based on a plurality of two-dimensional images generated by imaging the subject from a plurality of different imaging positions; acquiring imaging three-dimensional coordinates and imaging posture information, the imaging three-dimensional coordinates being three-dimensional coordinates in a virtual space where the three-dimensional model is placed and indicating an imaging position when a target two-dimensional image among the plurality of two-dimensional images is generated, and the imaging posture information indicating a posture of a camera that performs imaging; placing the target two-dimensional image in the virtual space based on the imaging three-dimensional coordinates and the imaging posture information; calculating first target three-dimensional coordinates, which are three-dimensional coordinates in the virtual space of a target image included in the target two-dimensional image; and calculating second target three-dimensional coordinates, which are three-dimensional coordinates of a position where a straight line passing through the imaging three-dimensional coordinates and the first target three-dimensional coordinates contacts the three-dimensional model.

### [Advantageous Effects of Invention]

According to the present disclosure, it is possible to provide an image analysis apparatus, an image analysis method, and a computer program that make it possible to identify a position of a target region on a three-dimensional model by a simple process.

### [BRIEF DESCRIPTION OF DRAWINGS]

[FIG. 1]

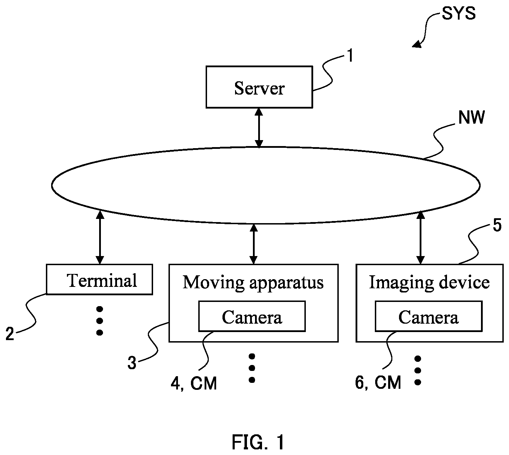

   FIG. 1 is a block diagram showing an example configuration of an image analysis system according to an embodiment of the present invention.
[FIG. 2]

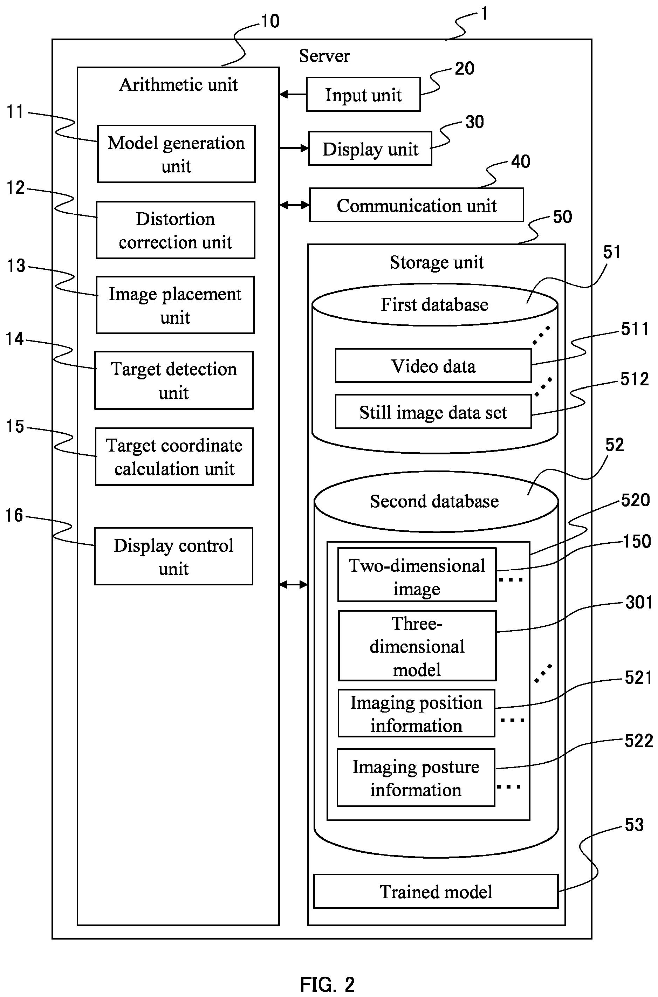

   FIG. 2 is a block diagram showing an example configuration of a server according to the embodiment.
[FIG. 3]

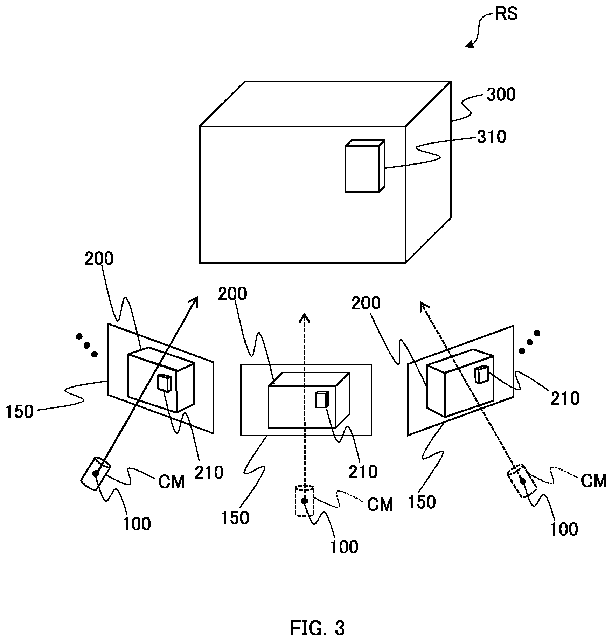

   FIG. 3 is a perspective view schematically showing a camera, a two-dimensional image, and a subject in real space according to the embodiment.
[FIG. 4]

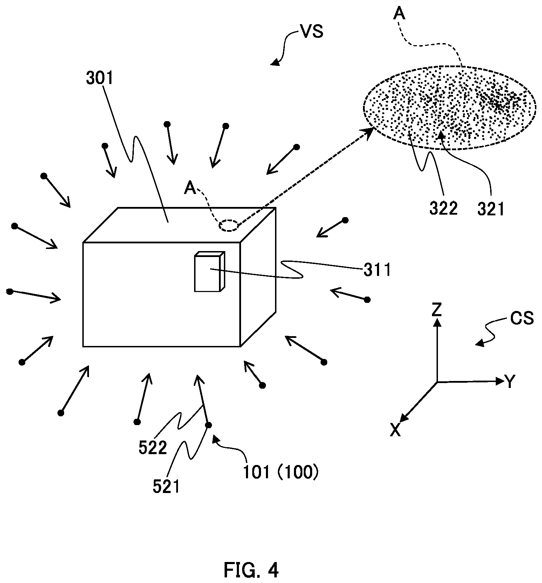

   FIG. 4 is a perspective view schematically showing an imaging position and a three-dimensional model of a subject in a virtual space according to the embodiment.
[FIG. 5]

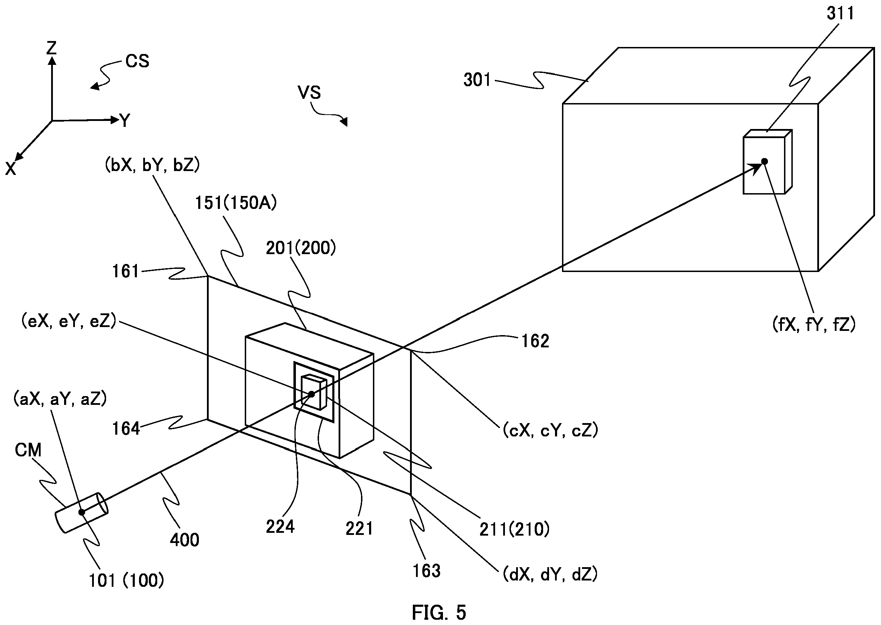

   FIG. 5 is a perspective view schematically showing an imaging position, a target two-dimensional image, and a three-dimensional model in a virtual space according to the embodiment.
[FIG. 6]

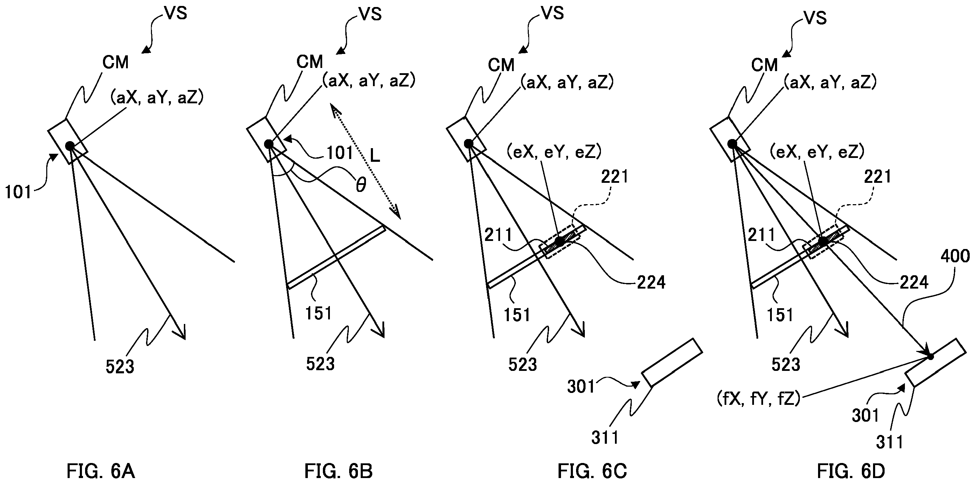

   FIG. 6A is a side view schematically showing an imaging position represented in a virtual space according to the embodiment. FIG. 6B is a side view schematically showing a target two-dimensional image placed in the virtual space. FIG. 6C is a side view schematically showing a target image and a bounding box included in the target two-dimensional image placed in the virtual space, and a target region included in the three-dimensional model. FIG. 6D is a side view schematically showing a state in which a straight line passing through the imaging position and the target image contacts the three-dimensional model in the virtual space.
[FIG. 7]

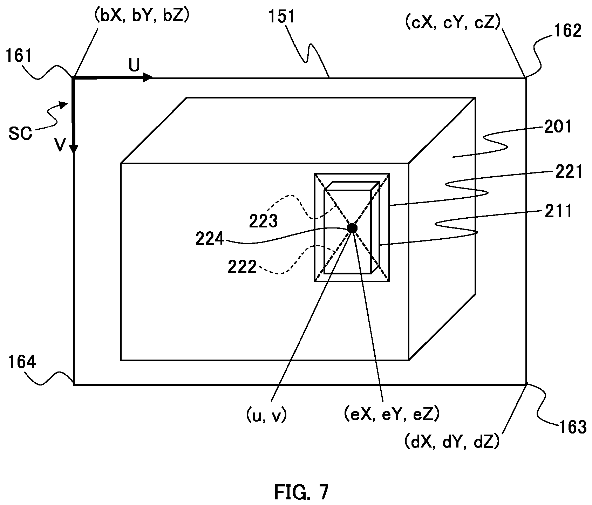

   FIG. 7 is a front view showing a target two-dimensional image placed in a virtual space according to the embodiment.
[FIG. 8]

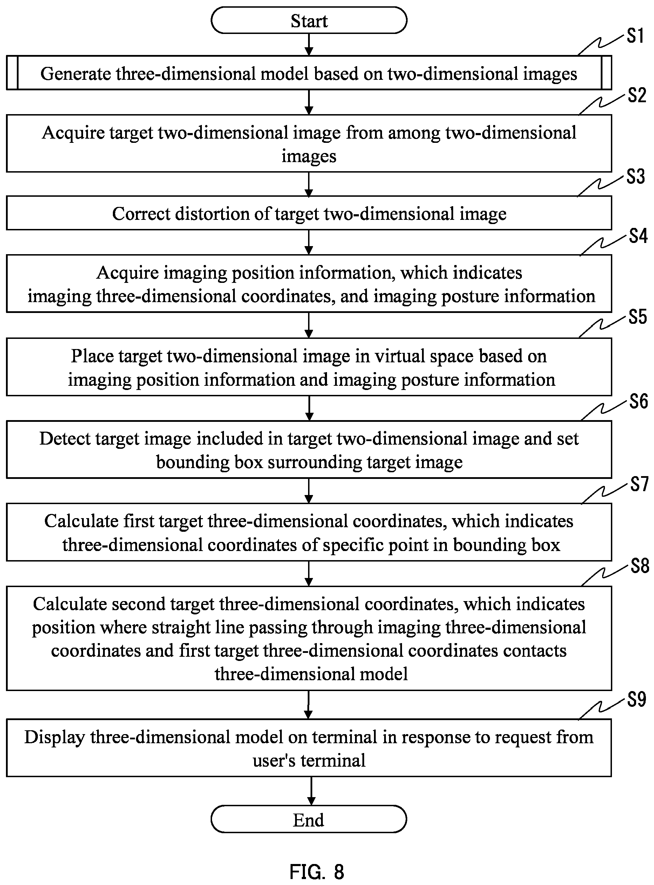

   FIG. 8 is a flowchart showing an image analysis method according to the embodiment.
[FIG. 9]

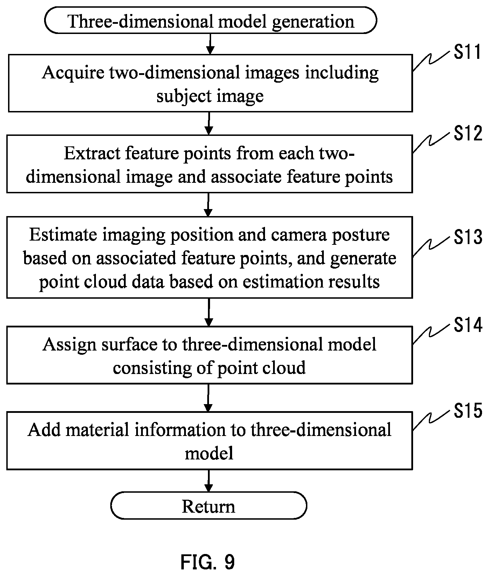

   FIG. 9 is a flowchart showing a three-dimensional model generation process according to the embodiment.
[FIG. 10]

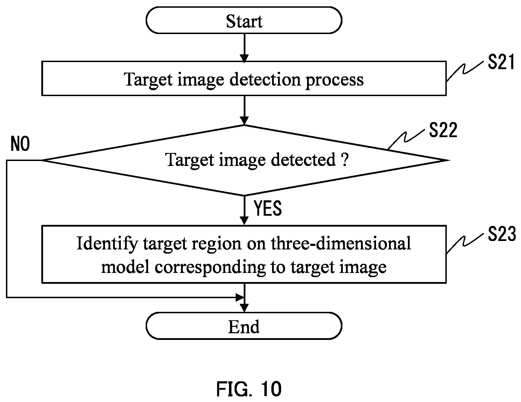

   FIG. 10 is a flowchart showing an image analysis method according to a modification of the embodiment.

### [DESCRIPTION OF EMBODIMENTS]

The following is a detailed description of a preferred embodiment of the present disclosure with reference to the accompanying drawings. In this specification and the drawings, duplicated explanations will be omitted by applying the same reference numerals to configuration elements that have substantially the same functional configuration.

FIG. 1 shows an example configuration of an image analysis system SYS according to an embodiment of the present invention. As shown in FIG. 1, the image analysis system SYS includes a server 1. The server 1 corresponds to an example of an "image analysis apparatus" of the present disclosure.

The server 1 generates a three-dimensional model of a subject to be placed in a virtual space based on a plurality of two-dimensional images generated by imaging the subject from a plurality of different imaging positions. In the virtual space, the server 1 calculates a position where a straight line passing through the imaging position and a target image included in a single two-dimensional image contacts the three-dimensional model (that is, a position of a target region on the three-dimensional model). As a result, the position of the target region on the three-dimensional model is identified. **In** the embodiment, instead of executing a process to search for the target region across the entire area of the three-dimensional model, the position of the target region on the three-dimensional model is calculated from a camera position and a single two-dimensional image. Therefore, it is possible to identify the position of the target region on the three-dimensional model by a simple process. Details on this will be described below.

The image analysis system SYS also includes at least one terminal 2, at least one moving apparatus 3, or at least one imaging device 5.

The server 1, the terminal 2, the moving apparatus 3, and the imaging device 5 are connected to a network NW. The network NW includes, for example, the Internet, a closed network, a public telephone network, a LAN (Local Area Network), and a short-range wireless network.

The terminal 2 is, for example, a personal computer (e.g., a notebook PC, a desktop PC, or a tablet).

The moving apparatus 3 is, for example, an unmanned moving apparatus or a manned moving apparatus. The unmanned moving apparatus is, for example, an unmanned aerial vehicle such as a drone, an unmanned ground machine, an unmanned underwater vehicle, or an unmanned surface vehicle. The unmanned ground machine is, for example, an unmanned ground vehicle or an unmanned ground machine modeled after a living organism (e.g., a snake-type unmanned ground machine). The manned moving apparatus is, for example, an aircraft, an automobile, a ship, or a submarine. The moving apparatus 3 includes a camera 4.

The imaging device 5 includes a camera 6. The imaging device 5 is, for example, a portable terminal such as a smartphone. The imaging device 5 may be, for example, the camera 6 itself.

The cameras 4 and 6 image a subject and generate video data that represents a moving image including an image of the subject. The moving image is a sequence of consecutive two-dimensional images. The cameras 4 and 6 may also generate a plurality of still image data items each representing a still image including an image of the subject. A still image is a two-dimensional image.

The video data is hereinafter referred to as "video data 511" (FIG. 2). The still image data items are referred to as "still image data set 512" (FIG. 2).

Hereinafter, when it is not necessary to distinguish between the cameras 4 and 6, they are collectively referred to as "camera CM."

The subject is not particularly limited as long as it can be imaged by the camera CM, and the size, shape, pattern, and color of the subject are not particularly limited. For example, the subject is one or more movable or immovable properties. The subject is, for example, one or more objects. Typically, the subject is one or more stationary objects. The stationary object is, for example, an artificial object or a natural object. The artificial object is, for example, a structure, a machine, an electronic device, or a work of authorship. The structure is, for example, a building or an infrastructure facility. The building is, for example, a high-rise building or a residential house. The infrastructure facility is a facility for building social infrastructure. For example, the infrastructure facility is a road, a bridge, a road traffic facility, a power generation facility, a power distribution facility, a water treatment facility, or a gas distribution facility. The machine is, for example, an automobile, a work vehicle, a train, an aircraft, a ship, a submarine, or a robot. The natural object is, for example, a tree, a forest, a ground surface, a cliff, a coast, or a river.

Furthermore, the subject includes one or more targets to be identified for their position on the three-dimensional model. The targets are not particularly limited and can be set arbitrarily, such as the entire region included in the subject, a part of the region, the entire object included in the subject, and a part of the object, etc.

The terminal 2 acquires the video data 511 or the still image data set 512 generated by the camera CM. For example, the terminal 2 receives the video data 511 or the still image data set 512 transmitted from the camera CM via the network NW. For example, the terminal 2 acquires the video data 511 or the still image data set 512 from a removable media. The terminal 2 transmits the video data 511 or the still image data set 512 to the server 1 via the network NW. The moving apparatus 3 and the imaging device 5 may also transmit the video data 511 or the still image data set 512 to the server 1 via the network NW.

FIG. 2 is a block diagram showing an example configuration of the server 1 in FIG. 1. As shown in FIG. 2, the server 1 includes an arithmetic unit 10, a communication unit 40, and a storage unit 50. The server 1 may also include an input unit 20 and a display unit 30.

The input unit 20 is an input device for inputting various types of information to the arithmetic unit 10. For example, the input unit 20 is a keyboard and a pointing device, or a touch panel.

The display unit 30 displays various types of information. The display unit 30 is, for example, a liquid crystal display or an organic electroluminescent display.

The communication unit 40 is connected to the network NW. The communication unit 40 communicates with external devices connected to the network NW. The external devices are, for example, the terminal 2, the moving apparatus 3, and the imaging device 5. The communication unit 40 is a communication device that communicates according to a predetermined communication protocol, including, for example, a network interface controller. The predetermined communication protocol is, for example, a protocol compliant with Ethernet (registered trademark) and the Internet Protocol Suite.

The communication unit 40 receives, for each subject, the video data 511 or the still image data set 512 generated by imaging the subject from the terminal 2, the moving apparatus 3, and the imaging device 5 via the network NW.

The storage unit 50 includes a storage device that stores data and computer programs. The storage unit 50 includes a main storage device such as a semiconductor memory or the like, and an auxiliary storage device such as a semiconductor memory, a hard disk drive, or the like. The storage unit 50 may also include removable media, such as an optical disk. The storage unit 50 may be, for example, a non-transitory computer readable storage medium.

The storage unit 50 stores a first database 51, a second database 52, and a trained model 53.

The first database 51 includes the video data 511 and the still image data set 512 received by the communication unit 40. In the first database 51, the video data 511 and the still image data set 512 are associated with attribute information (hereinafter referred to as "attribute information AT"). The attribute information AT includes, for example, user information, imaging conditions, and subject information. The user information includes, for example, identification information of a user of the terminal 2, the moving apparatus 3, or the imaging device 5. The imaging conditions include, for example, date and time of imaging and calibration information of the camera CM. The calibration information includes, for example, information about lens distortion of the camera CM, a focal length, and information about a position of a principal point. The lens distortion information includes, for example, information about distortion. The imaging conditions may include information about an imaging location. The imaging location is indicated, for example, by position coordinates of the camera CM obtained by GPS (Global Positioning System) or GNSS (Global Navigation Satellite System). The subject information includes, for example, subject identification information. The subject information may include coordinates of a ground control point (GCP: Ground Control Point).

The second database 52 includes a plurality of data sets 520. Each of the plurality of data sets 520 includes a plurality of two-dimensional images 150, a three-dimensional model 301 (point cloud data), a plurality of imaging position information items 521, and a plurality of imaging posture information items 522. In the second database 52, the two-dimensional images 150, the three-dimensional model 301, the imaging position information items 521, and the imaging posture information items 522 are associated with each other and with the attribute information AT. These details are described later.

The trained model 53 is a computer program. The trained model 53 includes, for example, a neural network. Details of the trained model 53 are described later.

The arithmetic unit 10 performs various calculations. The arithmetic unit 10 includes a processor such as a CPU (Central Processing Unit), a GPU (Graphics Processing Unit), or the like.

Specifically, the arithmetic unit 10 includes a model generation unit 11, a distortion correction unit 12, an image placement unit 13, a target detection unit 14, a target coordinate calculation unit 15, and a display control unit 16. For example, the arithmetic unit 10 functions as the model generation unit 11, the distortion correction unit 12, the image placement unit 13, the target detection unit 14, the target coordinate calculation unit 15, and the display control unit 16 by executing a computer program stored in the storage unit 50.

Next, with reference to FIGS. 2 to 6, the process performed by the arithmetic unit 10 will be described. FIG. 3 is a perspective view schematically showing a camera CM, a two-dimensional image 150, and a subject 300 in real space RS. As shown in FIG. 3, the subject 300 includes a target 310. The two-dimensional image 150 includes a subject image 200 representing the subject 300. The subject image 200 includes a target image 210 representing the target 310 depending on an imaging position 100. In the embodiment, the single camera CM is moved while imaging the subject 300 to generate the two-dimensional images 150. FIG. 4 is a perspective view schematically showing an imaging position 101 and a three-dimensional model 301 of the subject 300 in a virtual space VS. In FIG. 4, the imaging position 101 is shown by a black circle. For ease of understanding, a region A of the three-dimensional model 301 is shown enlarged.

As shown in FIGS. 2 to 4, the model generation unit 11 of the arithmetic unit 10 generates the three-dimensional model 301 of the subject 300 based on the plurality of two-dimensional images 150 generated by imaging the subject 300 from the plurality of different imaging positions 100. The three-dimensional model 301 includes a target region 311 representing the target 310 of the subject 300. The three-dimensional model 301 is placed in the virtual space VS. The three-dimensional model 301 represents a three-dimensional shape of the subject 300. The three-dimensional model 301 is formed by point cloud data. The point cloud data is data representing a point cloud 321. The point cloud 321 is an aggregation of multiple points 322. The point cloud data includes three-dimensional coordinates of each point 322. The point cloud data may further include one or more of color information (e.g., RGB values) of each point 322, normal vector information of each point, and reflection intensity information.

As an example, the model generation unit 11 generates the three-dimensional model 301 by performing SfM (Structure from Motion) processing. SfM processing refers to a process that generates the three-dimensional model 301 by utilizing the principle of triangulation based on the plurality of two-dimensional images 150 generated by imaging the subject 300 having a plurality of feature points from the plurality of imaging positions 100. SfM processing preferably includes bundle adjustment. The bundle adjustment refers to a process of minimizing reprojection error.

Specifically, the model generation unit 11 first acquires the plurality of two-dimensional images 150 including the subject image 200 from the video data 511 or the still image data set 512 in the first database 51. Next, the model generation unit 11 extracts feature points of the subject 300 from each of the two-dimensional images 150 and associates the feature points across the two-dimensional images 150 (feature point matching). The associated feature points are called tie points. In the feature point matching, the model generation unit 11 employs, for example, SIFT (Scale Invariant Feature Transformation), SURF (Speeded-Up Robust Features), or FAST (Features from Accelerated Segment Test).

Next, the model generation unit 11 estimates the imaging position 100 (the position of the camera CM) and a posture (orientation) of the camera CM when each of the two-dimensional images 150 is generated based on the associated feature points, and calculates three-dimensional coordinates of a three-dimensional point corresponding to a feature point based on the estimation results. In this case, the model generation unit 11 optimizes the estimation results of the imaging position 100 and the posture of the camera CM, as well as the three-dimensional coordinates of the three-dimensional point, by performing the bundle adjustment. The model generation unit 11 calculates three-dimensional coordinates of a plurality of three-dimensional points corresponding to a plurality of feature points. The three-dimensional coordinates in this case indicate coordinates in a three-dimensional coordinate system CS set in the virtual space VS. The three-dimensional coordinate system CS is defined by mutually orthogonal X, Y, and Z axes. The three-dimensional coordinate system CS may be a coordinate system with an origin at a predetermined position in the virtual space VS, or the three-dimensional coordinate system CS may be a coordinate system to which geospatial coordinates (coordinates on ground) or actual dimension information is assigned.

The plurality of three-dimensional points constitute the point cloud 321. In other words, each three-dimensional point is each point 322 constituting the point cloud 321. In the above manner, the model generation unit 11 generates the point cloud data. In this case, for example, the point cloud data represents a sparse point cloud 321. Since the three-dimensional model 301 is constituted by the point cloud data, the generation of the point cloud data is synonymous with the generation of the three-dimensional model 301.

The model generation unit 11 may add one or more of color information, luminance information, normal vector information, and reflection intensity information to each point 322 constituting the point cloud 321. In addition to SfM processing, the model generation unit 11 may also perform MVS (Multi View Stereo) processing. MVS processing refers to a process that calculates depth and normal for each pixel in each of the two-dimensional images 150 by multi-view stereo measurement, integrates them, and generates a dense point cloud 321 of the subject 300. Therefore, the model generation unit 11 can generate point cloud data representing the dense point cloud 321 by performing MVS processing. In this case, the three-dimensional model 301 is formed by the dense point cloud 321.

As described above, in the process of generating the three-dimensional model 301, the model generation unit 11 estimates the imaging position 100 and the posture of the camera CM for each of the two-dimensional images 150.

The imaging position 100 indicates the position of the camera CM when the subject 300 is imaged and the two-dimensional image 150 is generated. The estimated result of the imaging position 100 (hereinafter referred to as "imaging position information item 521") is represented by three-dimensional coordinates in the three-dimensional coordinate system CS (hereinafter referred to as "imaging three-dimensional coordinates"). As shown in FIG. 4, in the embodiment, the imaging position 100 in the real space RS is shown as "imaging position 101" in the virtual space VS. The imaging position information item 521 is estimated for each of the two-dimensional images 150.

The posture of the camera CM indicates the posture (orientation) of the camera CM when the subject 300 is imaged and the two-dimensional image 150 is generated. The estimated result of the posture of the camera CM (hereinafter referred to as "imaging posture information item 522") is represented by a rotation angle of the camera CM around the X axis, a rotation angle of the camera CM around the Y axis, and a rotation angle of the camera CM around the Z axis in the three-dimensional coordinate system CS. In FIG. 4, for simplification of the drawing, the imaging posture information items 522 are shown by arrows. The imaging posture information item 522 is estimated for each of the two-dimensional images 150. The model generation unit 11 may also perform a process to reduce the effect of gimbal lock when estimating the posture of the camera CM. The gimbal lock is a phenomenon in which three degrees of freedom of rotation become two degrees of freedom when a three-dimensional posture is expressed in terms of Euler angles.

The model generation unit 11 assigns a surface to the three-dimensional model 301 based on the point cloud data. The process of assigning the surface is, as an example, a process of converting the point cloud data constituting the three-dimensional model 301 into mesh data. In this case, for example, the model generation unit 11 generates a plurality of polygonal (e.g., triangular) facets (e.g., polygons) formed by connecting points 322 of the point cloud data constituting the three-dimensional model 301, and represents the three-dimensional model 301 by the plurality of polygonal facets. In this case, for example, the model generation unit 11 generates TIN (Triangulated Irregular Network) data based on the point cloud data, and represents the three-dimensional model 301 by the TIN data. As a result, the three-dimensional model 301 is represented by an aggregation of triangular facets.

The process of assigning a surface to the three-dimensional model 301 is not particularly limited and may be the following process. For example, the model generation unit 11 assigns a facet to each point 322 constituting the point cloud data. In this case, the facet is, for example, a circular facet centered on each point 322 constituting the point cloud data. Alternatively, for example, the model generation unit 11 assigns a surface to the three-dimensional model 301 formed by the point cloud data by performing an octree algorithm. In this case, specifically, the model generation unit 11 represents the three-dimensional model 301 by multiple cubes by recursively dividing the three-dimensional model 301 into eight cubes (octants). Alternatively, for example, the model generation unit 11 assigns a surface to the three-dimensional model 301 by converting the point cloud data to surface data.

The model generation unit 11 may also add material information based on the two-dimensional image 150 to the surface assigned to the three-dimensional model 301. The material information is information that includes a color and a pattern of the subject 300. For example, the model generation unit 11 may perform a process of mapping a texture to each facet (e.g., each polygon) constituting the mesh data of the three-dimensional model 301. In this case, the mesh data is, for example, TIN data.

The storage unit 50 stores the three-dimensional model 301 (the point cloud data forming the three-dimensional model 301) in the second database 52. Furthermore, the storage unit 50 stores the plurality of two-dimensional images 150, the plurality of imaging position information items 521, and the plurality of imaging posture information items 522 in the second database 52 in association with the three-dimensional model 301. In the second database 52, the two-dimensional images 150 are stored in association with the imaging position information items 521 and the imaging posture information items 522.

As long as the imaging position information item 521 and the imaging posture information item 522 can be obtained, the method of generating the three-dimensional model 301 is not particularly limited. For example, the model generation unit 11 may generate the three-dimensional model 301 by 3D Gaussian Splatting.

Continuing to refer to FIG. 2, the distortion correction unit 12 of the arithmetic unit 10 will be described. The distortion correction unit 12 acquires from the second database 52 a two-dimensional image 150 to be processed (hereinafter referred to as "target two-dimensional image 150A") from among the plurality of two-dimensional images 150 used in generating the three-dimensional model 301.

The distortion correction unit 12 also acquires the calibration information of the camera CM from the second database 52. The distortion correction unit 12 corrects distortion of the target two-dimensional image 150A based on the calibration information. The distortion in this case is, for example, lens distortion. The lens distortion is, for example, a type of distortion.

Next, with reference to FIGS. 2, 5, and 6A, the image placement unit 13 of the arithmetic unit 10 will be described. FIG. 5 and FIGS. 6A to 6D render the camera CM for ease of understanding.

FIG. 5 is a perspective view schematically showing the imaging position 101, a target two-dimensional image 151, and the three-dimensional model 301 in the virtual space VS. As shown in FIG. 5, in the embodiment, the target two-dimensional image 150A placed in the virtual space VS is described as "target two-dimensional image 151". Also, the subject image 200 and the target image 210 of the target two-dimensional image 150A placed in the virtual space VS are described as "subject image 201" and "target image 211," respectively.

FIG. 6A is a side view schematically showing the imaging position 101 represented in the virtual space VS. FIG. 6B is a side view schematically showing the target two-dimensional image 151 placed in the virtual space VS.

First, as shown in FIG. 2, the image placement unit 13 acquires the imaging position information item 521 and the imaging posture information item 522 associated with the target two-dimensional image 150A from the second database 52. The imaging position information item 521 indicates imaging three-dimensional coordinates (aX, aY, aZ). As shown in FIG. 5 and FIG. 6A, the imaging position 101 in the virtual space VS is indicated by the imaging three-dimensional coordinates (aX, aY, aZ).

Next, as shown in FIGS. 5 and 6B, the image placement unit 13 places the target two-dimensional image 151, in which distortion has been corrected, in the virtual space VS based on the imaging position information item 521 and the imaging posture information item 522.

Specifically, the image placement unit 13 places the target two-dimensional image 151 in the virtual space VS at a position separated by a predetermined distance L along the optical axis 523 from the imaging three-dimensional coordinates (aX, aY, aZ). In this case, the image placement unit 13 places the target two-dimensional image 151 in the virtual space VS so that the target two-dimensional image 151 is orthogonal to an optical axis 523 of the camera CM and the size of the target two-dimensional image 151 corresponds to an angle of view θ of the camera CM.

In this case, the image placement unit 13 calculates three-dimensional coordinates (bX, bY, bZ), (cX, cY, cZ), (dX, dY, dZ) in the virtual space VS where at least three corners 161, 162, 163 of four corners 161, 162, 163, 164 of the target two-dimensional image 151 are placed. Then, the image placement unit 13 places the target two-dimensional image 151 in the virtual space VS by placing at least three corners 161-163 of the four corners 161-164 of the target two-dimensional image 151 at the three-dimensional coordinates (bX, bY, bZ) to (dX, dY, dZ).

Next, the target detection unit 14 of the arithmetic unit 10 will be described with reference to FIGS. 2, 5, 6C, and 7. FIG. 6C is a side view schematically showing the target image 211 and a bounding box 221 included in the target two-dimensional image 151 placed in the virtual space VS, and the target region 311 included in the three-dimensional model 301. FIG. 7 is a front view showing the target two-dimensional image 151 placed in the virtual space VS. In FIG. 7, the target two-dimensional image 151 is viewed from the imaging position 101.

As shown in FIG. 2, preferably, the target detection unit 14 utilizes the trained model 53 that is constructed by being trained with training data items. The trained model 53 is constructed by being trained with the training data items. In this case, the training is supervised learning. As an example, the trained model 53 employs YOLO (You Only Look Once), which is an object detection algorithm based on a convolutional neural network. The object detection algorithm is not particularly limited and may be, for example, R-CNN (Regions with Convolutional Neural Network) or SSD (Single Shot Multi-Box Detector). The training data items each include a two-dimensional image including a target image and an information tag. The information tag is attached to the two-dimensional image. The information tag includes a bounding box surrounding the target image included in a subject image in the two-dimensional image. The information tag may further include a name of the target image. The bounding box corresponds to an example of "information for identifying the target image" of the present disclosure.

The object detection algorithm may be an algorithm that performs segmentation. In this case, the object detection algorithm is, for example, "U-NET" that performs semantic segmentation, "Mask R-CNN" that performs instance segmentation, or "Panoptic Feature Pyramid Network" that performs panoptic segmentation.

As shown in FIGS. 2, 5, 6C, and 7, the target detection unit 14, as an example, causes the trained model 53 to detect the target image 211 included in the target two-dimensional image 151 and sets the bounding box 221 surrounding the target image 211. In this way, the target detection unit 14 causes the trained model 53 to detect the target image 211 and identfy the target image 211. In other words, when the target detection unit 14 inputs the target two-dimensional image 151 to the trained model 53, the trained model 53 outputs the target two-dimensional image 151 that includes the target image 211 surrounded by the bounding box 221. In FIG. 6C, the bounding box 221 is exaggerated to make the drawing easier to view.

Although the target detection unit 14 employs the trained model 53, for example, a rule-based algorithm may be employed to detect the target image 211.

Next, with reference to FIGS. 2, 5, 6C, 6D, and 7, the target coordinate calculation unit 15 will be described. FIG. 6D is a side view schematically showing a state in which a straight line 400 passing through the imaging position 101 and the target image 211 in the virtual space VS contacts the three-dimensional model 301.

As shown in FIGS. 2, 5, 6C, and 7, the target coordinate calculation unit 15 calculates three-dimensional coordinates (eX, eY, eZ) in the virtual space VS of the target image 211 included in the target two-dimensional image 151. Hereinafter, the three-dimensional coordinates (eX, eY, eZ) are referred to as "first target three-dimensional coordinates (eX, eY, eZ)".

Specifically, the target coordinate calculation unit 15 calculates the first target three-dimensional coordinates (eX, eY, eZ) based on the three-dimensional coordinates (bX, bY, bZ) to (dX, dY, dZ) of at least three corners 161 to 163 among the four corners 161-164 of the target two-dimensional image 151.

Preferably, as shown in FIG. 7, the first target three-dimensional coordinates (eX, eY, eZ) are indicated by three-dimensional coordinates in the virtual space VS of a specific point 224 in the bounding box 221. The specific point 224 is, as an example, the intersection of a diagonal line 222 and a diagonal line 223 of the bounding box 221. Thus, the specific point 224 is determined based on the bounding box 221. The specific point 224 is a point inside the target image 211. The bounding box 221 is a rectangle surrounding the target image 211.

In this case, specifically, the target coordinate calculation unit 15 calculates two-dimensional coordinates (u, v) of the specific point 224 in the bounding box 221 in the target two-dimensional image 151. The two-dimensional coordinates (u, v) are coordinates of a screen coordinate system SC. The screen coordinate system SC is defined by mutually orthogonal U-axis and V-axis. An origin of the screen coordinate system SC is not particularly limited, but is set, for example, at the corner 161 of the target two-dimensional image 151. The origin may be set, for example, at a center of the target two-dimensional image 151.

Then, based on the three-dimensional coordinates (bX, bY, bZ) to (dX, dY, dZ) of at least three corners 161 to 163 among the four corners 161 to 164 of the target two-dimensional image 151, the target coordinate calculation unit 15 transforms the two-dimensional coordinates (u, v) of the specific point 224 in the screen coordinate system SC into the first target three-dimensional coordinates (eX, eY, eZ), which are three-dimensional coordinates.

The specific point 224 is determined based on the bounding box 221, but is not particularly limited as long as it is a point inside the target image 211.

Next, as shown in FIGS. 5 and 6D, the target coordinate calculation unit 15 calculates three-dimensional coordinates (fX, fY, fZ) of a position where the straight line 400 passing through the imaging three-dimensional coordinates (aX, aY, aZ) and the first target three-dimensional coordinates (eX, eY, eZ) contacts the three-dimensional model 301. The three-dimensional coordinates (fX, fY, fZ) in this case are referred to as "second target three-dimensional coordinates (fX, fY, fZ)". In other words, the second target three-dimensional coordinates (fX, fY, fZ) are three-dimensional coordinates of an intersection point when the straight line 400 intersects the three-dimensional model 301. The straight line 400 is, for example, a virtual straight line.

The second target three-dimensional coordinates (fX, fY, fZ) indicate three-dimensional coordinates of the target region 311 on the three-dimensional model 301. The target region 311 corresponds to the target image 211 and is a region that reproduces the target 310 in the subject 300 on the three-dimensional model 301.

Specifically, the target coordinate calculation unit 15 calculates the second target three-dimensional coordinates (fX, fY, fZ), which are the position where the straight line 400 contacts the surface of the three-dimensional model 301. In other words, the second target three-dimensional coordinates (fX, fY, fZ) are three-dimensional coordinates of an intersection point when the straight line 400 intersects the surface of the three-dimensional model 301.

For example, in a case where a plurality of polygonal (e.g., triangular) facets are assigned to the three-dimensional model 301 with the points 322 of the point cloud 321 serving as vertices, the target coordinate calculation unit 15 sets, as the second target three-dimensional coordinates, an average value of three-dimensional coordinates of a plurality of vertices defining the facet that the straight line 400 contacts among the plurality of polygonal facets. Alternatively, for example, the target coordinate calculation unit 15 sets, as the second target three-dimensional coordinates, three-dimensional coordinates of a vertex closest to the position where the straight line 400 contacts among the plurality of vertices defining the facet that the straight line 400 contacts.

For example, in a case where a circular facet centered at each point 322 constituting the point cloud 321 is assigned to the three-dimensional model 301, the target coordinate calculation unit 15 sets, as the second target three-dimensional coordinates, three-dimensional coordinates of the point 322 at the center of the circular facet that the straight line 400 contacts.

For example, in a case where a plurality of cubes are assigned to the three-dimensional model 301 by an octree algorithm, the target coordinate calculation unit 15 sets, as the second target three-dimensional coordinates, three-dimensional coordinates of the point 322 encompassed by the cube having a facet that the straight line 400 contacts. In a case where a plurality of points 322 are encompassed in the cube, an average value of three-dimensional coordinates of the plurality of points 322 is set as the second target three-dimensional coordinates.

As explained above with reference to FIGS. 5 and 6, according to the embodiment, the target coordinate calculation unit 15 calculates the second target three-dimensional coordinates (fX, fY, fZ), which are the three-dimensional coordinates of the target region 311 on the three-dimensional model 301, by determining the position where the straight line 400, which passes through the imaging three-dimensional coordinates (aX, aY, aZ) and the first target three-dimensional coordinates (eX, eY, eZ) of the target two-dimensional image 151, contacts the three-dimensional model 301 in the virtual space VS. Thus, in the embodiment, instead of performing a process to search for a target region across the entire area of a three-dimensional model, the position of the target region 311 on the three-dimensional model 301 is identified based on the imaging three-dimensional coordinates (aX, aY, aZ) and the single target two-dimensional image 151. In other words, the position of the target region 311 on the three-dimensional model 301 is identified by processing a two-dimensional image (the target two-dimensional image 151). Therefore, it is possible to identify the position of the target region 311 on the three-dimensional model 301 by a simple process.

In addition, according to the embodiment, the position of the target region 311 on the three-dimensional model 301 is automatically identified by the arithmetic unit 10. Therefore, human work to visually search for the target region 311 on the three-dimensional model 301 can be omitted. Thus, the human workload can be reduced.

In particular, the imaging position information item 521 (the imaging three-dimensional coordinates (aX, aY, aZ)) and the imaging posture information item 522 are necessarily calculated as byproducts when generating the three-dimensional model 301. Accordingly, it is possible to suppress the occurrence of additional processing for identifying the target region 311 on the three-dimensional model 301.

Also, according to the embodiment, the model generation unit 11 assigns the surface to the three-dimensional model 301. Therefore, the straight line 400 always contacts the three-dimensional model 301. Thus, it is possible to reliably calculate the second target three-dimensional coordinates (fX, fY, fZ), which indicate the position of the target region 311, without depending on the density of the point cloud 321.

Furthermore, according to the embodiment, the distortion correction unit 12 corrects distortion of the target two-dimensional image 151. Therefore, even when the target image 211 is present in a region where distortion occurs in the target two-dimensional image 151, it is possible to calculate with high accuracy the two-dimensional coordinates (u, v) indicating the position of the target image 211 and the first target three-dimensional coordinates (eX, eY, eZ).

Furthermore, according to the embodiment, the target detection unit 14 inputs the target two-dimensional image 151 to the trained model 53 to have the target image 211 detected. In other words, the trained model 53 is constructed by being trained with the two-dimensional images 150 as training data items. Therefore, compared to a case where a trained model for detecting a target image is constructed by being trained with a three-dimensional model, it is possible to reduce the workload on an operator in creating training data, the volume of training data, and the amount of calculations for training. As a result, it is possible to reduce the cost and training time for constructing the trained model 53. In particular, the target image 211 is detected on a two-dimensional image (the target two-dimensional image 151) instead of analyzing a three-dimensional model to detect a target region. Therefore, according to the embodiment, it is possible to identify the target region 311 on the three-dimensional model 301 by a faster and simpler process compared to the case where a target region is detected by analyzing a three-dimensional model.

Furthermore, according to the embodiment, the first target three-dimensional coordinates (eX, eY, eZ) are three-dimensional coordinates of the specific point 224 determined based on the bounding box 221. In other words, the specific point 224 is determined as the intersection of diagonal line 222 and diagonal line 223 of the bounding box 221. Therefore, it is possible to easily determine the specific point 224 by a simple process compared to a case where the specific point 224 is determined at any point in the target image 211.

Next, an image analysis method according to the embodiment will be described with reference to FIGS. 2 and 8. FIG. 8 is a flowchart showing the image analysis method. The image analysis method is performed by the server 1. As shown in FIG. 8, the image analysis method includes Steps S1 to S9. A computer program stored in the storage unit 50 causes the arithmetic unit 10 to execute Steps S1 to S9. In other words, a computer program product realizes Steps S1 to S9 when the computer program is executed by the arithmetic unit 10. The arithmetic unit 10 corresponds to an example of a "computer" of the present disclosure.

As shown in FIGS. 2 and 8, first, in Step S1, the model generation unit 11 generates the three-dimensional model 301 of the subject 300 based on the plurality of two-dimensional images 150 generated by imaging the subject 300 from the plurality of different imaging positions 100.

Next, in Step S2, the distortion correction unit 12 acquires the target two-dimensional image 150A from the second database 52 from among the plurality of two-dimensional images 150.

Next, in Step S3, the distortion correction unit 12 corrects distortion of the target two-dimensional image 150A based on the calibration information. The target two-dimensional image 150A whose distortion has been corrected is stored in the storage unit 50.

Next, in Step S4, the image placement unit 13 acquires the imaging position information item 521 and the imaging posture information item 522 from the second database 52. The imaging position information item 521 indicates the position of the camera CM at the time of imaging by means of the imaging three-dimensional coordinates (aX, aY, aZ) in the three-dimensional coordinate system CS. The imaging posture information item 522 indicates the posture of the camera CM at the time of imaging by the rotation angles in the three-dimensional coordinate system CS.

Next, in Step S5, the image placement unit 13 places the target two-dimensional image 150A, whose distortion has been corrected, in the virtual space VS based on the imaging position information item 521 and the imaging posture information item 522. The target two-dimensional image 150A placed in the virtual space VS is referred to as "target two-dimensional image 151".

Next, in Step S6, the target detection unit 14 causes the trained model 53 to detect the target image 211 included in the target two-dimensional image 151 and sets the bounding box 221 surrounding the target image 211.

Next, in Step S7, the target coordinate calculation unit 15 calculates the first target three-dimensional coordinates (eX, eY, eZ), which indicate three-dimensional coordinates of the specific point 224 in the bounding box 221.

Next, in Step S8, the target coordinate calculation unit 15 calculates the second target three-dimensional coordinates (fX, fY, fZ) that indicate a position where the straight line 400 passing through the imaging three-dimensional coordinates (aX, aY, aZ) indicated by the imaging position information item 521 and the first target three-dimensional coordinates (eX, eY, eZ) contacts the three-dimensional model 301. The second target three-dimensional coordinates (fX, fY, fZ) indicate three-dimensional coordinates of the target region 311 on the three-dimensional model 301. In this way, a position of the target 310 included in the subject 300 is identified as the target region 311 on the three-dimensional model 301.

Next, in Step S9, the display control unit 16 causes the three-dimensional model 301 to be displayed on the terminal 2 via the communication unit 40 in response to a request from a user of the terminal 2. For example, the display control unit 16 causes the three-dimensional model 301 to be displayed on the terminal 2 in a manner that allows operation. For example, the display control unit 16 causes the terminal 2 to display the target two-dimensional image 151 superimposed on the three-dimensional model 301. For example, the display control unit 16 causes the three-dimensional model 301 to be displayed on the terminal 2 in a posture such that the target region 311 on the three-dimensional model 301 is displayed on the terminal 2. In this case, for example, the display control unit 16 causes the target region 311 on the three-dimensional model 301 to be displayed on the terminal 2 in an enlarged state. Therefore, according to the embodiment, the user of the terminal 2 can omit the task of visually searching for the target region 311 on the three-dimensional model 301. In other words, it is possible to reduce the workload of the user. When Step S9 is completed, the image analysis method ends.

As described above with reference to FIG. 8, according to the image analysis method of the embodiment, the position of the target region 311 on the three-dimensional model 301 is identified by calculating the position where the straight line 400 contacts the three-dimensional model 301 in the virtual space VS. Therefore, it is possible to identify the position of the target region 311 by a simple process.

FIG. 9 is a flowchart showing the three-dimensional model generation process in Step S1 of FIG. 8. As shown in FIG. 9, the three-dimensional model generation process includes Steps S11 to S15.

First, in Step S11, the model generation unit 11 acquires the plurality of two-dimensional images 150 including the subject image 200 from the first database 51.

Next, in Step S12, the model generation unit 11 extracts feature points of the subject 300 from each of the two-dimensional images 150 and associates feature points across the two-dimensional images 150.

Next, in Step S13, the model generation unit 11 estimates the imaging position 100 and the posture of the camera CM when each two-dimensional image 150 is generated based on the associated feature points. Then, the model generation unit 11 calculates three-dimensional coordinates of three-dimensional points corresponding to the feature points based on the estimation results of the imaging position 100 (the imaging position information items 521) and the posture of the camera CM (the imaging posture information items 522). As a result, the point cloud data representing the point cloud 321 consisting of the plurality of three-dimensional points (the plurality of points 322) is generated.

Next, in Step S14, the model generation unit 11 assigns the surface to the three-dimensional model 301 based on the point cloud data.

Next, in Step S15, the model generation unit 11 adds material information based on the two-dimensional images 150 to the surface assigned to the three-dimensional model 301. The process then returns to Step S2 in FIG. 8.

### (Modification)

Referring to FIGS. 2 and 10, a modification of the embodiment is described. In the modification, the target 310 included in the subject 300 is a portion of the subject 300 that represents a specific state. The following is a description of the main points in which the modification differs from the above embodiment.

In the modification, the target image 211 shown in FIG. 7 is an image of a portion of the subject 300 that represents a specific state (hereinafter referred to as "specific state portion"). Therefore, according to the modification, the specific state portion of the subject 300 is identified as the target region 311 on the three-dimensional model 301. In other words, the position of the target region 311 representing the specific state portion of the subject 300 is calculated as the second target three-dimensional coordinates on the three-dimensional model 301. As a result, human work to visually search for the target region 311 representing the specific state portion on the three-dimensional model 301 can be omitted. In addition, The risk of missing the detection of the target region 311 representing the specific state portion can be reduced.

The specific state portion of the subject 300 is, for example, a portion of the entirety or a portion of an interest region of the subject 300 that represents an abnormal state that is not a normal state (hereinafter referred to as "abnormal state portion"). Therefore, in this case, the target image 211 is an image of the abnormal state portion. As a result, the need for human work to visually search for the target region 311 that represents the abnormal state portion on the three-dimensional model 301 can be omitted. In addition, the risk of missing the detection of the target region 311 that represents the abnormal state portion can be reduced.

As an example, the target image 211 represents a region of the target two-dimensional image 151 that has changed relative to a reference two-dimensional image. The region that has changed relative to the reference two-dimensional image is, for example, a region that has undergone deformation, mutation, displacement, increase, decrease, or disappearance relative to the reference two-dimensional image. The reference two-dimensional image is, for example, a two-dimensional image of the subject 300 imaged earlier than the target two-dimensional image 151. Alternatively, the reference two-dimensional image is, for example, a two-dimensional image generated by imaging the subject 300 in a reference state. The reference state is, for example, a state where the entirety or the interest region of the subject 300 is in a normal state. In this example, the target image 211 is an image of a portion of the entirety or a portion of the interest region of the subject 300 that represents an abnormal state.

Next, an image analysis method related to the modification is described with reference to FIG. 2 and FIG. 10. FIG. 10 is a flowchart showing the image analysis method according to the modification. The image analysis method is performed by the server 1. As shown in FIG. 10, the image analysis method includes Steps S21 to S23. A computer program stored in the storage unit 50 causes the arithmetic unit 10 to execute Steps S21 to S23. In other words, a computer program product realizes Steps S21 to S23 when the computer program is executed by the arithmetic unit 10.

First, in Step S21, the target detection unit 14 executes a target image detection process. The target image detection process indicates a process of detecting a target image 210 from video data 511 of a subject 300, a two-dimensional image 150 extracted from the video data 511, a still image data set 512, or a two-dimensional image 150 extracted from the still image data set 512. Hereinafter, the video data 511, the two-dimensional image 150 extracted from the video data 511, the still image data set 512, and the still image data set 512 are collectively referred to as "detection target image data."

For example, the target detection unit 14 inputs the detection target image data to a trained model. In a case where the trained model detects the target image 210 in the detection target image data, the trained model outputs information indicating that the detection target image data includes the target image 210. In a case where the trained model does not detect the target image 210 from the detection target image data, the trained model outputs information indicating that the detection target image data does not include the target image 210.

The trained model is a computer program that is constructed by being trained with training data items. The trained model includes, for example, a neural network. The training is, for example, supervised learning. The training data item is the detection target image data and "information that indicates inclusion of a target image."

Next, in Step S22, the target detection unit 14 determines whether or not the target image 210 is detected in the target image detection process.

When a negative determination is made in Step S22 (NO), the image analysis method ends.

On the other hand, when an affirmative determination is made in Step S22 (YES), the process proceeds to Step S23.

Next, in Step S23, the arithmetic unit 10 identifies the target region 311 on the three-dimensional model 301 corresponding to the target image 210. The process of Step S23 is similar to the processes of Steps S1 to S9 shown in FIG. 8. When Step S23 is completed, the image analysis method ends.

As described above with reference to FIG. 10, according to the modification, the processing of Step S23 is executed only when the target image 210 is detected. Therefore, the processing load of the arithmetic unit 10 can be reduced. In particular, when the target image 210 is not detected, the three-dimensional model 301 is not generated, thus reducing the processing load of the arithmetic unit 10. Also, in this case, an increase in the amount of data stored in the storage unit 50 can be suppressed.

The image analysis method shown in FIG. 10 can also be applied to the above embodiment described with reference to FIGS. 1 to 9.

The apparatus or system described in this specification may be realized as a single apparatus or may be realized by a plurality of apparatuses (e.g., cloud servers), some or all of which are connected via a network. For example, some or all of the model generation unit 11, the distortion correction unit 12, the image placement unit 13, the target detection unit 14, the target coordinate calculation unit 15, and the display control unit 16 may be realized by the same computer or server. Also, for example, the model generation unit 11, the distortion correction unit 12, the image placement unit 13, the target detection unit 14, the target coordinate calculation unit 15, and the display control unit 16 may be realized by the terminal 2. For example, the model generation unit 11, the distortion correction unit 12, the image placement unit 13, the target detection unit 14, the target coordinate calculation unit 15, and the display control unit 16 may be realized by separate computers or servers. For example, the first database 51, the second database 52, and the trained model 53 may be stored in separate storage devices or servers.

A series of processes by the apparatus described in this specification may be realized using software, hardware, or a combination of software and hardware. It is possible to create a computer program to realize each function of the arithmetic unit 10 according to the present embodiment and to implement it in a PC or the like. Also, a computer-readable recording medium storing such a computer program can be provided. The recording medium is, for example, a magnetic disk, an optical disk, a magneto-optical disk, a flash memory, or the like. Also, the computer program described above may be distributed via a network, for example, without using a recording medium.

The processes described in this specification using flowchart diagrams do not necessarily have to be executed in the illustrated order. Some processing steps may be executed in parallel. Also, additional processing steps may be adopted, and some processing steps may be omitted.

The effects described in this specification are merely explanatory or illustrative and are not limiting. In other words, the technology according to the present disclosure may achieve other effects that are apparent to those skilled in the art from the description in this specification, either together with or in place of the above effects.

### [Industrial Applicability]

The present disclosure provides an image analysis apparatus, an image analysis method, and a computer program, and has industrial applicability.

### [Reference Signs List]

1 Server (Image analysis apparatus), 11 Model generation unit, 12 Distortion correction unit, 13 Image placement unit, 14 Target detection unit, 15 Target coordinate calculation unit, 16 Display control unit, 53 Trained model

## Claims

1. An image analysis apparatus (1) comprising:
a model generation unit (11) that generates a three-dimensional model (301) of a subject (300) based on a plurality of two-dimensional images (150) generated by imaging the subject (300) from a plurality of different imaging positions (100);
an image placement unit (13) that places, among the plurality of two-dimensional images (150), a target two-dimensional image (150A, 151) in a virtual space (VS) based on imaging three-dimensional coordinates (aX, aY, aZ) and imaging posture information, the imaging three-dimensional coordinates (aX, aY, aZ) being three-dimensional coordinates in the virtual space (VS) where the three-dimensional model (301) is placed and indicating an imaging position (100, 101) when the target two-dimensional image (150A, 151) is generated, and the imaging posture information indicating a posture of a camera (CM) that performs imaging; and
a target coordinate calculation unit (15) that calculates second target three-dimensional coordinates (fX, fY, fZ) indicating a position where a straight line (400) passing through the imaging three-dimensional coordinates (aX, aY, aZ) and first target three-dimensional coordinates (eX, eY, eZ) contacts the three-dimensional model (301), wherein
the first target three-dimensional coordinates (eX, eY, eZ) indicate a position in the virtual space (VS) of a target image (210, 211) included in the target two-dimensional image (150A, 151);
**characterized in that**:
the three-dimensional model (301) is composed of point cloud data,
the model generation unit (11) assigns a surface to the three-dimensional model (301) based on the point cloud data, and
the target coordinate calculation unit (15) calculates the second target three-dimensional coordinates (fX, fY, fZ), which are the position where the straight line (400) contacts the surface.

2. The image analysis apparatus (1) according to claim 1, further comprising
a distortion correction unit (12) that corrects distortion of the target two-dimensional image (150A, 151), wherein
the target coordinate calculation unit (15) calculates the first target three-dimensional coordinates (eX, eY, eZ) based on the target two-dimensional image (150A, 151) that has been corrected for distortion.

3. The image analysis apparatus (1) according to claim 1, further comprising
a target detection unit (14) that identifies the target image (210, 211) by causing a trained model (53) to detect the target image (210, 211) included in the target two-dimensional image (150A, 151), the trained model (53) being constructed by being trained with training data items, wherein
the training data items each include a two-dimensional image including a target image (210, 211) and an information tag, and
the information tag includes information for identifying the target image (210, 211).

4. The image analysis apparatus (1) according to claim 3, wherein
the target detection unit (14) causes the trained model (53) to detect the target image (210, 211) and sets a bounding box (221) surrounding the target image (210, 211), and
the first target three-dimensional coordinates (eX, eY, eZ) indicate the three-dimensional coordinates of a specific point (224) in the virtual space (VS) determined based on the bounding box (221).

5. The image analysis apparatus (1) according to claim 1, wherein
the target image (210, 211) is an image of a portion of the subject (300) that represents a specific state.

6. An image analysis method comprising:
generating a three-dimensional model (301) of a subject (300) based on a plurality of two-dimensional images (150) generated by imaging the subject (300) from a plurality of different imaging positions (100);
acquiring imaging three-dimensional coordinates (aX, aY, aZ) and imaging posture information, the imaging three-dimensional coordinates (aX, aY, aZ) being three-dimensional coordinates in a virtual space (VS) where the three-dimensional model (301) is placed and indicating an imaging position (100, 101) when a target two-dimensional image (150A, 151) among the plurality of two-dimensional images (150) is generated, and the imaging posture information indicating a posture of a camera (CM) that performs imaging;
placing the target two-dimensional image (150A, 151) in the virtual space (VS) based on the imaging three-dimensional coordinates (aX, aY, aZ) and the imaging posture information;
calculating first target three-dimensional coordinates (eX, eY, eZ), which are three-dimensional coordinates in the virtual space (VS) of a target image (210, 211) included in the target two-dimensional image (150A, 151); and
calculating second target three-dimensional coordinates (fX, fY, fZ), which are three-dimensional coordinates of a position where a straight line (400) passing through the imaging three-dimensional coordinates (aX, aY, aZ) and the first target three-dimensional coordinates (eX, eY, eZ) contacts the three-dimensional model (301);
**characterized in that**:
the three-dimensional model (301) is composed of point cloud data,
the method further comprises assigning a surface to the three-dimensional model (301) based on the point cloud data, and
the method further comprises calculating the second target three-dimensional coordinates (fX, fY, fZ), which are the position where the straight line (400) contacts the surface.

7. A computer program causing a computer to perform:
generating a three-dimensional model (301) of a subject (300) based on a plurality of two-dimensional images (150) generated by imaging the subject (300) from a plurality of different imaging positions (100);
acquiring imaging three-dimensional coordinates (aX, aY, aZ) and imaging posture information, the imaging three-dimensional coordinates (aX, aY, aZ) being three-dimensional coordinates in a virtual space (VS) where the three-dimensional model (301) is placed and indicating an imaging position (100, 101) when a target two-dimensional image (150A, 151) among the plurality of two-dimensional images (150) is generated, and the imaging posture information indicating a posture of a camera (CM) that performs imaging;
placing the target two-dimensional image (150A, 151) in the virtual space (VS) based on the imaging three-dimensional coordinates (aX, aY, aZ) and the imaging posture information;
calculating first target three-dimensional coordinates (eX, eY, eZ), which are three-dimensional coordinates in the virtual space (VS) of a target image (210, 211) included in the target two-dimensional image (150A, 151); and
calculating second target three-dimensional coordinates (fX, fY, fZ), which are three-dimensional coordinates of a position where a straight line (400) passing through the imaging three-dimensional coordinates (aX, aY, aZ) and the first target three-dimensional coordinates (eX, eY, eZ) contacts the three-dimensional model (301);
**characterized in that**:
the three-dimensional model (301) is composed of point cloud data,
the computer program further causes the computer to perform assigning a surface to the three-dimensional model (301) based on the point cloud data, and
the computer program further causes the computer to perform calculating the second target three-dimensional coordinates (fX, fY, fZ), which are the position where the straight line (400) contacts the surface.

## Patentansprüche

1. Bildanalysevorrichtung (1), umfassend:
eine Modellerzeugungseinheit (11), die ein dreidimensionales Modell (301) eines Objekts (300) auf der Grundlage einer Mehrzahl von zweidimensionalen Bildern (150) erzeugt, die durch Aufnehmen des Objekts (300) von einer Mehrzahl von unterschiedlichen Bildaufnahmepositionen (100) aus erzeugt werden;
eine Bildplatzierungseinheit (13), die unter der Mehrzahl von zweidimensionalen Bildern (150) ein zweidimensionales Zielbild (150A, 151) auf der Grundlage von dreidimensionalen Bildaufnahmekoordinaten (aX, aY, aZ) und Bildaufnahme-Lageinformationen in einem virtuellen Raum (VS) platziert, wobei die dreidimensionalen Bildaufnahmekoordinaten (aX, aY, aZ) dreidimensionale Koordinaten in dem virtuellen Raum (VS) sind, in dem das dreidimensionale Modell (301) platziert ist, und eine Bildaufnahmeposition (100, 101) angeben, wenn das zweidimensionale Zielbild (150A, 151) erzeugt wird, und die Bildaufnahme-Lageinformationen eine Lage einer Kamera (CM) angeben, die die Bildaufnahme durchführt; und
eine Zielkoordinaten-Berechnungseinheit (15), die zweite dreidimensionale Zielkoordinaten (fX, fY, fZ) berechnet, die eine Position angeben, an der eine gerade Linie (400), die durch die dreidimensionalen Bildaufnahmekoordinaten (aX, aY, aZ) und erste dreidimensionale Zielkoordinaten (eX, eY, eZ) verläuft, das dreidimensionale Modell (301) berührt, wobei
die ersten dreidimensionalen Zielkoordinaten (eX, eY, eZ) eine Position eines Zielbilds (210, 211), das in dem zweidimensionalen Zielbild (150A, 151) enthalten ist, in dem virtuellen Raum (VS) angeben;
**dadurch gekennzeichnet, dass**:
das dreidimensionale Modell (301) aus Punktwolkendaten zusammengesetzt ist,
die Modellerzeugungseinheit (11) dem dreidimensionalen Modell (301) auf der Grundlage der Punktwolkendaten eine Oberfläche zuweist, und
die Zielkoordinaten-Berechnungseinheit (15) die zweiten dreidimensionalen Zielkoordinaten (fX, fY, fZ) berechnet, die die Position sind, an der die gerade Linie (400) die Oberfläche berührt.

2. Bildanalysevorrichtung (1) nach Anspruch 1, ferner umfassend
eine Verzerrungskorrektureinheit (12), die eine Verzerrung des zweidimensionalen Zielbilds (150A, 151) korrigiert, wobei
die Zielkoordinaten-Berechnungseinheit (15) die ersten dreidimensionalen Zielkoordinaten (eX, eY, eZ) auf der Grundlage des zweidimensionalen Zielbilds (150A, 151) berechnet, das hinsichtlich der Verzerrung korrigiert worden ist.

3. Bildanalysevorrichtung (1) nach Anspruch 1, ferner umfassend
eine Zieldetektionseinheit (14), die das Zielbild (210, 211) identifiziert, indem sie ein trainiertes Modell (53) veranlasst, das in dem zweidimensionalen Zielbild (150A, 151) enthaltene Zielbild (210, 211) zu detektieren, wobei das trainierte Modell (53) konstruiert wird, indem es mit Trainingsdatenelementen trainiert wird, wobei
die Trainingsdatenelemente jeweils ein zweidimensionales Bild, das ein Zielbild (210, 211) enthält, und ein Informations-Tag enthalten, und
das Informations-Tag Informationen zum Identifizieren des Zielbilds (210, 211) enthält.

4. Bildanalysevorrichtung (1) nach Anspruch 3, wobei
die Zieldetektionseinheit (14) das trainierte Modell (53) veranlasst, das Zielbild (210, 211) zu detektieren, und einen Begrenzungsrahmen (221) festlegt, der das Zielbild (210, 211) umgibt, und
die ersten dreidimensionalen Zielkoordinaten (eX, eY, eZ) die dreidimensionalen Koordinaten eines spezifischen Punkts (224) in dem virtuellen Raum (VS) angeben, der auf der Grundlage des Begrenzungsrahmens (221) bestimmt wird.

5. Bildanalysevorrichtung (1) nach Anspruch 1, wobei
das Zielbild (210, 211) ein Bild eines Abschnitts des Objekts (300) ist, der einen spezifischen Zustand darstellt.

6. Bildanalyseverfahren, umfassend:
Erzeugen eines dreidimensionalen Modells (301) eines Objekts (300) auf der Grundlage einer Mehrzahl von zweidimensionalen Bildern (150), die durch Aufnehmen des Objekts (300) von einer Mehrzahl von unterschiedlichen Bildaufnahmepositionen (100) aus erzeugt werden;
Erfassen von dreidimensionalen Bildaufnahmekoordinaten (aX, aY, aZ) und Bildaufnahme-Lageinformationen, wobei die dreidimensionalen Bildaufnahmekoordinaten (aX, aY, aZ) dreidimensionale Koordinaten in einem virtuellen Raum (VS) sind, in dem das dreidimensionale Modell (301) platziert ist, und eine Bildaufnahmeposition (100, 101) angeben, wenn ein zweidimensionales Zielbild (150A, 151) unter der Mehrzahl von zweidimensionalen Bildern (150) erzeugt wird, und die Bildaufnahme-Lageinformationen eine Lage einer Kamera (CM) angeben, die die Bildaufnahme durchführt;
Platzieren des zweidimensionalen Zielbilds (150A, 151) in dem virtuellen Raum (VS) auf der Grundlage der dreidimensionalen Bildaufnahmekoordinaten (aX, aY, aZ) und der Bildaufnahme-Lageinformationen;
Berechnen erster dreidimensionaler Zielkoordinaten (eX, eY, eZ), die dreidimensionale Koordinaten eines Zielbilds (210, 211), das in dem zweidimensionalen Zielbild (150A, 151) enthalten ist, in dem virtuellen Raum (VS) sind; und
Berechnen zweiter dreidimensionaler Zielkoordinaten (fX, fY, fZ), die dreidimensionale Koordinaten einer Position sind, an der eine gerade Linie (400), die durch die dreidimensionalen Bildaufnahmekoordinaten (aX, aY, aZ) und die ersten dreidimensionalen Zielkoordinaten (eX, eY, eZ) verläuft, das dreidimensionale Modell (301) berührt;
**dadurch gekennzeichnet, dass**:
das dreidimensionale Modell (301) aus Punktwolkendaten zusammengesetzt ist,
das Verfahren ferner das Zuweisen einer Oberfläche zu dem dreidimensionalen Modell (301) auf der Grundlage der Punktwolkendaten umfasst, und
das Verfahren ferner das Berechnen der zweiten dreidimensionalen Zielkoordinaten (fX, fY, fZ) umfasst, die die Position sind, an der die gerade Linie (400) die Oberfläche berührt.

7. Computerprogramm, das einen Computer veranlasst, Folgendes durchzuführen:
Erzeugen eines dreidimensionalen Modells (301) eines Objekts (300) auf der Grundlage einer Mehrzahl von zweidimensionalen Bildern (150), die durch Aufnehmen des Objekts (300) von einer Mehrzahl von unterschiedlichen Bildaufnahmepositionen (100) aus erzeugt werden;
Erfassen von dreidimensionalen Bildaufnahmekoordinaten (aX, aY, aZ) und Bildaufnahme-Lageinformationen, wobei die dreidimensionalen Bildaufnahmekoordinaten (aX, aY, aZ) dreidimensionale Koordinaten in einem virtuellen Raum (VS) sind, in dem das dreidimensionale Modell (301) platziert ist, und eine Bildaufnahmeposition (100, 101) angeben, wenn ein zweidimensionales Zielbild (150A, 151) unter der Mehrzahl von zweidimensionalen Bildern (150) erzeugt wird, und die Bildaufnahme-Lageinformationen eine Lage einer Kamera (CM) angeben, die die Bildaufnahme durchführt;
Platzieren des zweidimensionalen Zielbilds (150A, 151) in dem virtuellen Raum (VS) auf der Grundlage der dreidimensionalen Bildaufnahmekoordinaten (aX, aY, aZ) und der Bildaufnahme-Lageinformationen;
Berechnen erster dreidimensionaler Zielkoordinaten (eX, eY, eZ), die dreidimensionale Koordinaten eines Zielbilds (210, 211), das in dem zweidimensionalen Zielbild (150A, 151) enthalten ist, in dem virtuellen Raum (VS) sind; und
Berechnen zweiter dreidimensionaler Zielkoordinaten (fX, fY, fZ), die dreidimensionale Koordinaten einer Position sind, an der eine gerade Linie (400), die durch die dreidimensionalen Bildaufnahmekoordinaten (aX, aY, aZ) und die ersten dreidimensionalen Zielkoordinaten (eX, eY, eZ) verläuft, das dreidimensionale Modell (301) berührt;
**dadurch gekennzeichnet, dass**:
das dreidimensionale Modell (301) aus Punktwolkendaten zusammengesetzt ist,
das Computerprogramm ferner den Computer veranlasst, das Zuweisen einer Oberfläche zu dem dreidimensionalen Modell (301) auf der Grundlage der Punktwolkendaten durchzuführen, und
das Computerprogramm ferner den Computer veranlasst, das Berechnen der zweiten dreidimensionalen Zielkoordinaten (fX, fY, fZ) durchzuführen, die die Position sind, an der die gerade Linie (400) die Oberfläche berührt.

## Revendications

1. Appareil d'analyse d'images (1) comprenant :
une unité de génération de modèle (11) qui génère un modèle tridimensionnel (301) d'un sujet (300) sur la base d'une pluralité d'images bidimensionnelles (150) générées en imageant le sujet (300) depuis une pluralité de positions d'imagerie différentes (100) ;
une unité de placement d'image (13) qui place, parmi la pluralité d'images bidimensionnelles (150), une image bidimensionnelle cible (150A, 151) dans un espace virtuel (VS) sur la base de coordonnées tridimensionnelles d'imagerie (aX, aY, aZ) et d'informations de posture d'imagerie, les coordonnées tridimensionnelles d'imagerie (aX, aY, aZ) étant des coordonnées tridimensionnelles dans l'espace virtuel (VS) où le modèle tridimensionnel (301) est placé et indiquant une position d'imagerie (100, 101) lorsque l'image bidimensionnelle cible (150A, 151) est générée, et les informations de posture d'imagerie indiquant une posture d'une caméra (CM) qui effectue l'imagerie ; et
une unité de calcul de coordonnées cibles (15) qui calcule des secondes coordonnées tridimensionnelles cibles (fX, fY, fZ) indiquant une position où une ligne droite (400) passant par les coordonnées tridimensionnelles d'imagerie (aX, aY, aZ) et des premières coordonnées tridimensionnelles cibles (eX, eY, eZ) entre en contact avec le modèle tridimensionnel (301), dans lequel
les premières coordonnées tridimensionnelles cibles (eX, eY, eZ) indiquent une position, dans l'espace virtuel (VS), d'une image cible (210, 211) incluse dans l'image bidimensionnelle cible (150A, 151) ;
**caractérisé en ce que** :
le modèle tridimensionnel (301) est composé de données de nuage de points,
l'unité de génération de modèle (11) attribue une surface au modèle tridimensionnel (301) sur la base des données de nuage de points, et
l'unité de calcul de coordonnées cibles (15) calcule les secondes coordonnées tridimensionnelles cibles (fX, fY, fZ), qui sont la position où la ligne droite (400) entre en contact avec la surface.

2. Appareil d'analyse d'images (1) selon la revendication 1, comprenant en outre
une unité de correction de distorsion (12) qui corrige une distorsion de l'image bidimensionnelle cible (150A, 151), dans lequel
l'unité de calcul de coordonnées cibles (15) calcule les premières coordonnées tridimensionnelles cibles (eX, eY, eZ) sur la base de l'image bidimensionnelle cible (150A, 151) dont la distorsion a été corrigée.

3. Appareil d'analyse d'images (1) selon la revendication 1, comprenant en outre
une unité de détection de cible (14) qui identifie l'image cible (210, 211) en amenant un modèle entraîné (53) à détecter l'image cible (210, 211) incluse dans l'image bidimensionnelle cible (150A, 151), le modèle entraîné (53) étant construit en étant entraîné avec des éléments de données d'entraînement, dans lequel
les éléments de données d'entraînement incluent chacun une image bidimensionnelle incluant une image cible (210, 211) et une étiquette d'informations, et
l'étiquette d'informations inclut des informations pour identifier l'image cible (210, 211).

4. Appareil d'analyse d'images (1) selon la revendication 3, dans lequel l'unité de détection de cible (14) amène le modèle entraîné (53) à détecter l'image cible (210, 211) et définit une boîte englobante (221) entourant l'image cible (210, 211), et
les premières coordonnées tridimensionnelles cibles (eX, eY, eZ) indiquent les coordonnées tridimensionnelles d'un point spécifique (224) dans l'espace virtuel (VS) déterminé sur la base de la boîte englobante (221).

5. Appareil d'analyse d'images (1) selon la revendication 1, dans lequel
l'image cible (210, 211) est une image d'une partie du sujet (300) qui représente un état spécifique.

6. Procédé d'analyse d'images comprenant :
la génération d'un modèle tridimensionnel (301) d'un sujet (300) sur la base d'une pluralité d'images bidimensionnelles (150) générées en imageant le sujet (300) depuis une pluralité de positions d'imagerie différentes (100) ;
l'acquisition de coordonnées tridimensionnelles d'imagerie (aX, aY, aZ) et d'informations de posture d'imagerie, les coordonnées tridimensionnelles d'imagerie (aX, aY, aZ) étant des coordonnées tridimensionnelles dans un espace virtuel (VS) où le modèle tridimensionnel (301) est placé et indiquant une position d'imagerie (100, 101) lorsqu'une image bidimensionnelle cible (150A, 151) parmi la pluralité d'images bidimensionnelles (150) est générée, et les informations de posture d'imagerie indiquant une posture d'une caméra (CM) qui effectue l'imagerie ;
le placement de l'image bidimensionnelle cible (150A, 151) dans l'espace virtuel (VS) sur la base des coordonnées tridimensionnelles d'imagerie (aX, aY, aZ) et des informations de posture d'imagerie ;
le calcul de premières coordonnées tridimensionnelles cibles (eX, eY, eZ), qui sont des coordonnées tridimensionnelles, dans l'espace virtuel (VS), d'une image cible (210, 211) incluse dans l'image bidimensionnelle cible (150A, 151) ; et
le calcul de secondes coordonnées tridimensionnelles cibles (fX, fY, fZ), qui sont des coordonnées tridimensionnelles d'une position où une ligne droite (400) passant par les coordonnées tridimensionnelles d'imagerie (aX, aY, aZ) et les premières coordonnées tridimensionnelles cibles (eX, eY, eZ) entre en contact avec le modèle tridimensionnel (301) ;
**caractérisé en ce que** :
le modèle tridimensionnel (301) est composé de données de nuage de points,
le procédé comprend en outre l'attribution d'une surface au modèle tridimensionnel (301) sur la base des données de nuage de points, et
le procédé comprend en outre le calcul des secondes coordonnées tridimensionnelles cibles (fX, fY, fZ), qui sont la position où la ligne droite (400) entre en contact avec la surface.

7. Programme informatique amenant un ordinateur à effectuer :
la génération d'un modèle tridimensionnel (301) d'un sujet (300) sur la base d'une pluralité d'images bidimensionnelles (150) générées en imageant le sujet (300) depuis une pluralité de positions d'imagerie différentes (100) ;
l'acquisition de coordonnées tridimensionnelles d'imagerie (aX, aY, aZ) et d'informations de posture d'imagerie, les coordonnées tridimensionnelles d'imagerie (aX, aY, aZ) étant des coordonnées tridimensionnelles dans un espace virtuel (VS) où le modèle tridimensionnel (301) est placé et indiquant une position d'imagerie (100, 101) lorsqu'une image bidimensionnelle cible (150A, 151) parmi la pluralité d'images bidimensionnelles (150) est générée, et les informations de posture d'imagerie indiquant une posture d'une caméra (CM) qui effectue l'imagerie ;
le placement de l'image bidimensionnelle cible (150A, 151) dans l'espace virtuel (VS) sur la base des coordonnées tridimensionnelles d'imagerie (aX, aY, aZ) et des informations de posture d'imagerie ;
le calcul de premières coordonnées tridimensionnelles cibles (eX, eY, eZ), qui sont des coordonnées tridimensionnelles, dans l'espace virtuel (VS), d'une image cible (210, 211) incluse dans l'image bidimensionnelle cible (150A, 151) ; et
le calcul de secondes coordonnées tridimensionnelles cibles (fX, fY, fZ), qui sont des coordonnées tridimensionnelles d'une position où une ligne droite (400) passant par les coordonnées tridimensionnelles d'imagerie (aX, aY, aZ) et les premières coordonnées tridimensionnelles cibles (eX, eY, eZ) entre en contact avec le modèle tridimensionnel (301) ;
**caractérisé en ce que** :
le modèle tridimensionnel (301) est composé de données de nuage de points,
le programme informatique amène en outre l'ordinateur à effectuer l'attribution d'une surface au modèle tridimensionnel (301) sur la base des données de nuage de points, et
le programme informatique amène en outre l'ordinateur à effectuer le calcul des secondes coordonnées tridimensionnelles cibles (fX, fY, fZ), qui sont la position où la ligne droite (400) entre en contact avec la surface.
